# EUROPEAN PATENT SPECIFICATION

(11) **EP 3 804 528 B1**
(45) Date of publication and mention of the grant of the patent: **23.08.2023**
(21) Application number: 20200149.1
(22) Date of filing: 05.10.2020
(51) Int. Cl.: A23G 9/12, A47J 43/07

(54) **MODULAR STIRRER FOR LIQUID AND SEMI-LIQUID FOOD PRODUCTS**
MODULARER RÜHRER FÜR FLÜSSIGE UND HALBFLÜSSIGE NAHRUNGSMITTEL
AGITATEUR MODULAIRE POUR PRODUITS ALIMENTAIRES LIQUIDES ET SEMI-LIQUIDES

(30) Priority: 10.10.2019 IT 201900003572 U; 15.11.2019 IT 201900004113 U
(43) Date of publication of application: 14.04.2021
(73) Proprietor: Seat Plastic S.r.l., 42124 Reggio Emilia (IT)
(72) Inventor: MEDICI, Vittorio, 42123 Reggio Emilia (IT)
(74) Representative: Milli, Simone

(56) References cited:
- WO-A1-2011/109066
- US-A1- 2008 223 225

## Description

This invention relates to a modular stirrer for liquid and semi-liquid food products, such as ice creams, smoothies, milk shakes or the like, enriched with candied fruit pieces, pralines, sweets, chopped hazelnuts, chopped pistachio nuts and other condiments.

In particular, the invention relates to a modular stirrer comprising a non-reusable stirring element, also called the disposable stirrer, and a fixing body, designed to engage, on one side, with a rotary shaft of a stirring machine and, on the other side, with the stirring element.

The prior art techniques currently used in the field of disposable stirrers for liquid and semi-liquid food products involve the use of stirring elements, shaped in the form of a teaspoon at one end, which are shaped in such a way as to engage in a flexible fashion with a rotary shaft, and then be disconnected from the shaft and used as tools for consuming the product mixed previously.

In order to allow the stirring element and the rotary shaft to engage each other, the stirring element has, at the end which comes into contact with the rotary shaft, a recess or seat shaped in such a way as to allow a temporary fixing of the stirring element during the operations for mixing the liquid and semi-liquid product.

At the end of the mixing operations, the stirring element is disconnected from the rotary shaft and served, together with the liquid and semi-liquid product, by the user, to consume the mixed product.

Once the liquid and semi-liquid product has been consumed, the user may dispose of the stirring element in the appropriate bins and the stirring element is therefore used in a disposable mode, that is to say, it must not be washed and then re-used for a new consumption.

To allow an engagement between the stirring element and the rotary shaft which is easy and which, at the same time, guarantees an effective mixing, the stirring elements have the recess or seat for the rotary shaft at the end opposite the portion shaped in the form of a teaspoon, that is to say, the one which comes into contact with the liquid and semi-liquid product.

In order to guarantee an efficient mixing of the more viscous food products, such as, for example, ice cream, the stirring element must be able to provide quite a high torque and, consequently, effectively support the resistance to the opposite movement from the food product.

Thus, on the one hand, the engagement between the rotary shaft and the stirring element must be very stable to prevent detachment between the two elements, and on the other hand, the stirring element must be particularly robust to prevent breakages in the mixing operations.

Patent document EP 1938721 B1 describes a disposable teaspoon-shaped stirring element which is able to engage with a rotary shaft and configured for mixing a food product contained in a container, positioned below the rotary shaft and wherein the stirring element is partly immersed. US 4946287 A illustrates another disposable stirring element in the form of a teaspoon which is able to engage with a rotary shaft and equipped with a contact protuberance to better fix to the rotary shaft.

These stirring elements are particularly suitable for being made of plastic material by means of moulding processes, such as injection moulding and thermoforming, due to the characteristic shape of the seat, which would make the production with other materials, such as metals or wood, excessively expensive and/or laborious.

However, given the increasing attention towards reducing the consumption of plastic for environmental reasons and the forthcoming adoption of regulations against the use of tools or containers made of disposable plastic material especially in the food industry, the use of prior art stirring elements is planed to be reduced and subsequently prohibited.

In effect, since the stirring elements are made entirely, or almost entirely, of plastic material, they have an extremely high environmental pollution factor, owing to their lengthy biodegrading process.

If not properly disposed of and dispersed in the surrounding environment, a stirring element of known type requires many years to biodegrade with a considerable environmental impact and a high risk factor for the health of the animals who attempt to eat it.

There is a strongly felt need in the field of stirring elements for liquid and semi-liquid food products of having a stirring element which is simple to make and with a low environmental impact.

There is also a need for a stirrer for liquid and semi-liquid food products having a low environmental impact which, at the same time, guaranteeing a homogeneous and effective mixing of the food product.

The use of new biodegradable materials, different from the plastic used to date, does not allow the manufacture of the stirring elements using moulding techniques and, often, does not allow a shape which is, at the same time, suitable for the rotary shafts of the stirring machines on the market and sufficiently robust to guarantee an optimum mixing of the finished food product.

Document WO2011109066A1 shows a machine for mixing food products which includes a motor which turns a hollow shaft assembly that carries an agitator. The agitator has an I-beam shaped stem with a blade in the shape of the bowl of a spoon on one end of the stem. A socket is formed at the other end of the stem and has a bottom surface. An assembly for releasing the agitator from the shaft assembly includes a solenoid which pivots an arm that engages a plunger. The plunger includes a pin which is received in the hollow shaft assembly and which engages the bottom surface of the socket of the agitator upon activation of the solenoid to release the agitator from the hollow shaft assembly.

Document US2008223225 shows a food mixer which includes a rotatable shaft which carries a coupler having an aperture therein. An agitator is configured as a spoon having a bowl and a stem. The stem is received in the aperture and in one embodiment a flexible tab at the end of the stem is engaged by a lug in the aperture to attach the agitator to the coupler. In another embodiment, flexible tines have lugs which are received in a bore in a coupler to attach the agitator to the coupler.

The aim of the invention is therefore to provide a modular stirrer wherein the stirring element has a low environmental impact and is, at the same time, able to guarantee an optimum mixing of the liquid or semi-liquid product.

However, the use of a new material for making stirrers does not result in a change in the structure of the stirring machine, that is to say, the machine comprising the rotary shaft and all the mechanisms for moving the shaft.

The purchase of a new stirring machine almost identical to the prior art machines would be, for commercial establishments, an unnecessary waste of resources.

Another strongly felt need in the field of stirring elements for liquid and semi-liquid food products is that of having a modular stirrer which is able to couple with the prior art stirring machines, without therefore requiring the purchase of an ad hoc machine.

Another aim of the invention is therefore to provide a modular stirrer which can be used in combination with prior art stirring machines, that is to say, those used with plastic stirring elements.

According to the invention, these aims are achieved by a modular stirrer comprising the technical features described in one or more of the appended

The present invention discloses a modular stirrer (1) for liquid or semi-liquid food products which can be fixed to a rotary shaft (101) of a stirring machine (100), comprising:
- a teaspoon-shaped stirring element (2);
- a fixing body (3), equipped with first coupling means (4) for coupling to said stirring element (2) and second coupling means (5) for coupling to said rotary shaft (101), positioned above said stirring element (2) relative to an axis of extension (Z) according to a direction of vertical extension (V), wherein:
- the second coupling means (5) comprise a seat (6) for receiving the rotary shaft (101);
- said second coupling means (5) are positioned outside the seat (6); - the second coupling means (5) comprise at least one elastically compliant tab (5A) connected at one end to the seat (6);
- and wherein the first coupling means (4) comprise at least one elastic element (4E), configured for retaining the stirring element (2).

The characteristics of the invention, with reference to the above-mentioned aims, are clearly described in the claims below and its advantages are apparent from the detailed description which follows, with reference to the accompanying drawings which illustrate a preferred embodiments of the invention provided merely by way of example without restricting the scope of the inventive concept, and in which:
- Figure 1 is a perspective view of a machine for stirring liquid and semi-liquid food products containing the modular stirrer according to the invention (shown in a schematic form);
- Figure 2 is a cross section view of a first embodiment of the modular stirrer of Figure 1;
- Figure 3 is a front view of a second embodiment of a first configuration of the modular stirrer of Figure 1;
- Figure 4 is a front view of the modular stirrer according to the second embodiment of Figure 3 in a second configuration;
- Figure 5 is a cross section view through the plane A-A of the modular stirrer according to the second embodiment and according to the second configuration of Figure 4;
- Figure 6 is a front view of a third embodiment of a first configuration of the modular stirrer of Figure 1;
- Figure 7 is a front view of the modular stirrer according to the third embodiment of Figure 6 in a second configuration;

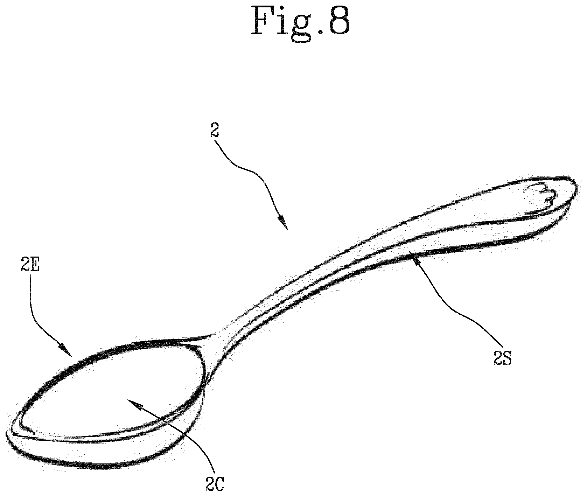

- Figure 8 is a perspective view of the stirring element part of the modular stirrer according to the invention in an example embodiment;
- Figure 9 is a side view of a first embodiment of the modular stirrer of Figure 1;
- Figure 10 is a front cross section view of the modular stirrer of Figure 9;
- Figure 11 is a perspective cross section view showing more clearly elements of the fixing element of the modular stirrer of Figure 9;
- Figure 12 is a front view of a second embodiment of the modular stirrer of Figure 1;
- Figure 13 is a front cross section view of the modular stirrer of Figure 12;
- Figure 14 is a perspective cross section view showing more clearly elements of the fixing element of the modular stirrer of Figure 12.

With reference to the accompanying drawings, the numeral 1 denotes a modular stirrer for liquid or semi-liquid food products P.

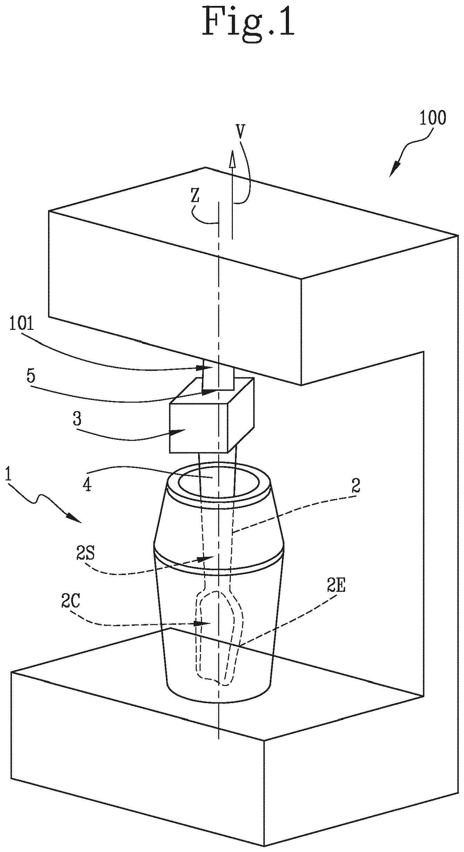

As illustrated in Figure 1, said modular stirrer 1 is fixable, in a reversible fashion, to a free end of a rotary shaft 101 of a stirring machine 100.

Said stirring machine 100 comprises a frame and one or more mechanisms, of substantially known type and for this reason not described or illustrated, designed to rotate the shaft 101 (which is part of the stirring machine itself) about an axis of extension Z.

Preferably, the machine 100 comprises an actuator (preferably an electric motor) for rotating the shaft 101.

Preferably, the axis of extension Z coincides with the longitudinal axis of extension of the rotation shaft and with the vertical axis of extension of the stirring machine 100 and is perpendicular to a supporting surface of the machine.

In the following description, the terms "lower" and "upper" are to be understood with reference to the longitudinal axis of extension Z and a direction of vertical extension V.

In particular, the modular stirrer is preferably fixed to the lower end of the rotary shaft 101.

The modular stirrer 1 comprises a stirring element 2 and a fixing body 3.

Said fixing body 3 is positioned below the rotary shaft 101 and is positioned above the stirring element 2.

In particular, the fixing body 3 is interposed between the rotary shaft 101 and the stirring element 2 and allows the rotational motion of the rotary shaft 101 to be transferred to the stirring element 2.

Preferably, said fixing body 3 is made of plastic material.

In other embodiments, said fixing body 3 is made of metallic material. Said fixing body 3 comprises first coupling means 4 to allow reversible (removable) cooping of the stirring element 2 to the fixing body 3.

Some embodiments of the various elements which make up the modular stirrer 1 are described below.

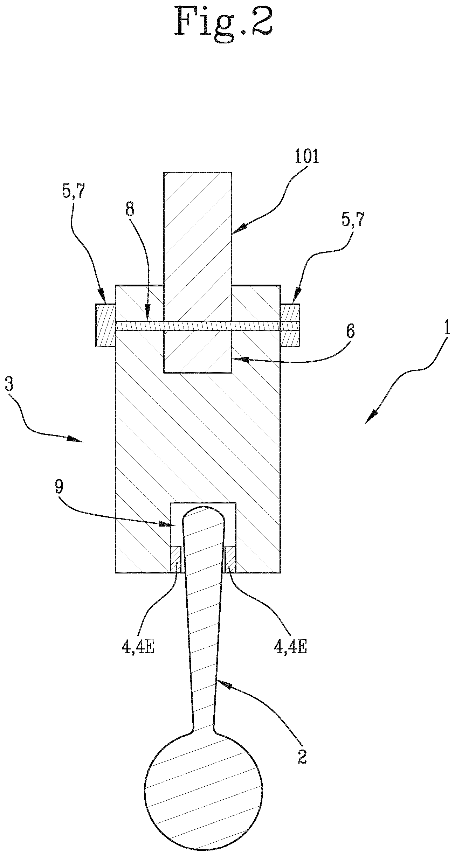

According to the invention and illustrated in Figure 2, said first coupling means 4 comprise at least one elastic element 4E.

Said elastic element 4E is configured to hold the stirring element 2 and maintain the contact with the fixing body 3, making it more difficult to detach said stirring elements 2 and said fixing body 3.

Preferably, in said embodiment, the fixing body 3 comprises a coupling zone 9 of the stirring element 2, in which the stirring element 2 is inserted. In this embodiment (see Figure 2), the elastic element is, preferably, positioned inside the coupling zone 9 for retaining the stirring element 2 in the coupling zone 9 and obstructing an accidental detachment from the fixing body 3.

In another embodiment, not illustrated, the coupling zone 9 comprises a seat for the stirring element 2, wherein the stirring element 2 is inserted without it being able to rotate freely or translate in a plane perpendicular to the axis of extension Z, that is to say, developing a shape coupling.

In both embodiments, the stirring element 2 is inserted at the bottom along the axis of extension Z inside the coupling zone 9 of the fasfixing body 3, where it remains locked until an ejection pulling action is applied by a user U.

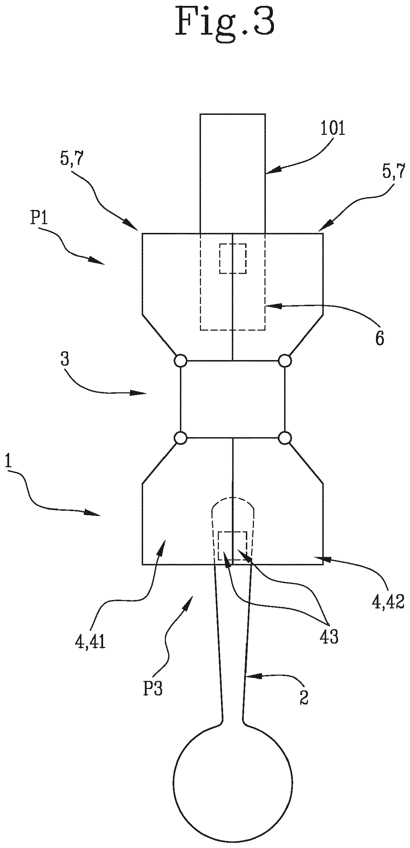

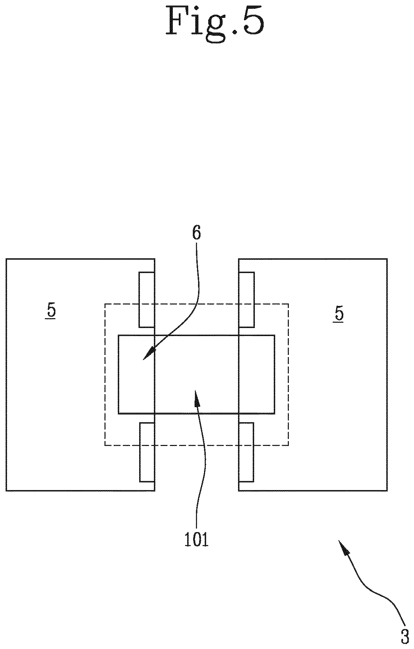

In another embodiment (see Figures 3 to 7), the first coupling means 4 comprise a first portion 41 and a second portion 42, of which at least one is movable, designed to mutually move between an engaged position P3 and an open position P4 of the stirring element 2.

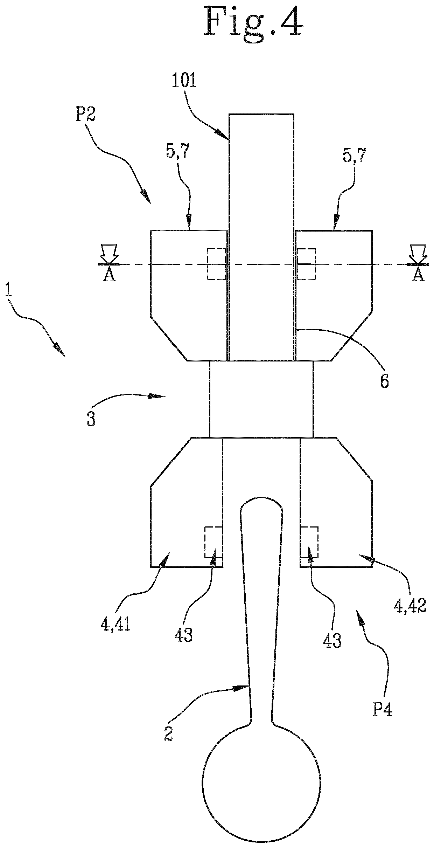

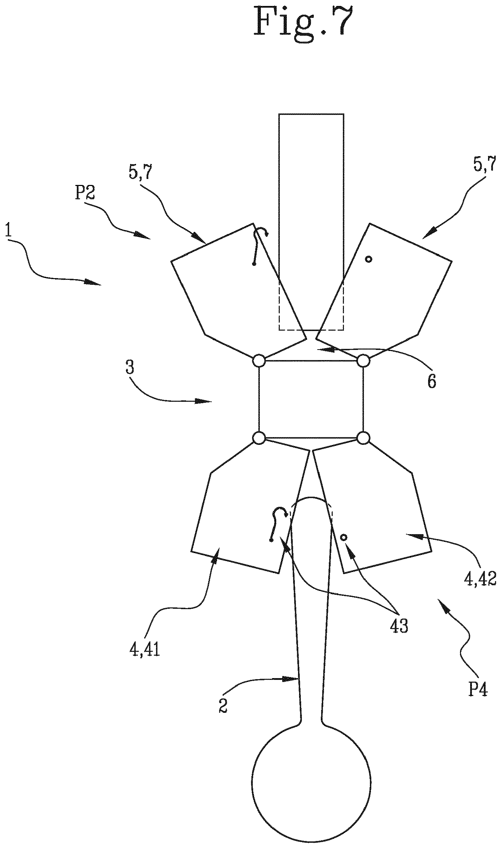

The open position P4, illustrated in Figures 4 and 7, is to be understood as a reciprocal position of the first portion 41 and of the second portion 42 wherein both the insertion and the release of the stirring element 2 are possible, actions which cannot be performed when the two portions 41,42 are in the engaged position P3.

In one embodiment, illustrated in Figures 3 and 4, at least one of either said first portion 41 or second portion 42 is movable in a translational direction along a plane perpendicular to the axis of extension Z between the position of engagement P3 of maximum proximity between the two portions 41,42 and the open portion P4 of maximum distance between the portions 41,42.

Preferably, in this embodiment, the first coupling means 4 comprise at least one guide, not illustrated, along which at least one between said first portion 41 and second portion 42 translates between the engaged position P3 and the open position P4 of the stirring element 2.

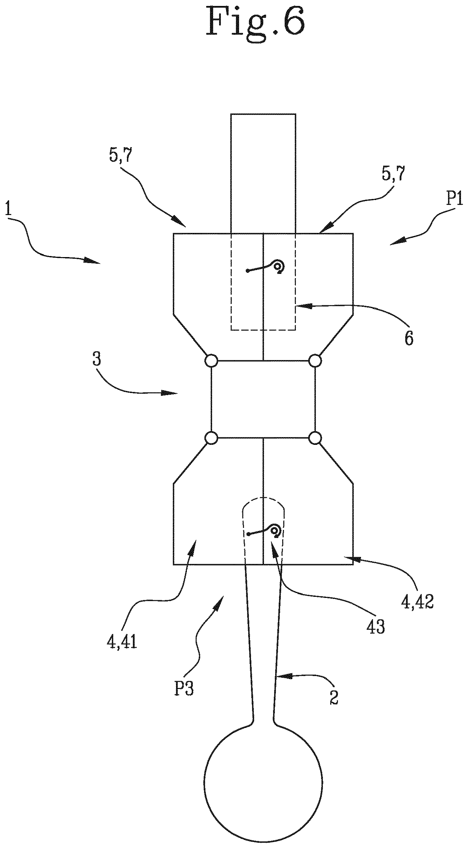

In a second embodiment, illustrated in Figures 6 and 7, at least one between said first portion 41 and second portion 42 is movable in a rotary direction about an axis lying in a plane perpendicular to the axis of extension Z between the position of maximum proximity P3 between the two portions 41, 42 and the open portion P4 of maximum distance between the portions 41, 42.

In this second embodiment (illustrated in Figures 6 and 7), the first coupling means 4 comprise at least one pin about which at least one of either said first portion 41 or second portion 42 rotates between the engaged position P3 and the open position P4 of the stirring element 2. Preferably, in both the embodiments described above, the first coupling means 4 comprise at least one coupling element 43, configured to maintain the engagement position P3.

In one embodiment (see Figures 6 and 7), the coupling element 43 comprises a hook-contact element system, where the hook is positioned on one of either said first portion 41 or second portion 42 and the contact element is positioned on the other of either said second portion 42 or first portion 41.

Said hook-contact element system reciprocates between a closed position, in which the maintaining of the engagement position P3 is ensured, and an open position, in which it is possible to move the first portion 41 and the second portion 42 away from each other and to reach the open position P4.

In a second embodiment, said coupling element 43 comprises magnetic means, wherein at least one pair of elements magnetically charged in the opposite direction are positioned one either said first portion 41 or second portion 42 and the other on the other of either said second portion 42 or first portion 41.

When the first portion 41 and the second portion 42 are sufficiently close to each other, the magnetic attraction between the pair of elements magnetically charged in the opposite direction forces the contact of the portions 41, 42 and the maintaining of the engaged position P3.

Only a mechanical traction greater than the magnetic attraction between the pair of elements magnetically charged in the opposite direction, preferably exerted by the user, allows the moving away of the first portion 41 and the second portion 42 and the consequent reaching of the open position P4.

The modular stirrer 1 is equipped with second means 5 for coupling to the rotary shaft 101 of the stirring machine 100.

Said second coupling means 5 comprise a seat 6 for receiving the rotary shaft 101, wherein the rotary shaft is inserted and fixed, in a reversible fashion, for transferring the rotary motion to the fixing body 3, which consequently transfers it to the stirring element 2.

According to an embodiment, illustrated in Figures 3 to 7, the seat 6 for receiving the rotary shaft 101 has the shape of a parallelepiped.

Advantageously, in this embodiment wherein the rotary shaft 101 also has a rectangular or square cross-section which is practically identical to the cross-section of the receiving seat 6 (defining a shape coupling), there are no relative rotations between the rotary shaft 101 and the fixing body 3.

According to another embodiment, not illustrated, the receiving seat 6 of the shaft 101 is cylindrical in shape.

Preferably, in this second embodiment, the second coupling means 5 comprise further means for locking the shaft 101, which will be described below, to prevent rotations of the shaft 101 in the receiving seat 6 without transfer of motion.

Preferably, said second coupling means 5 comprise movable contact elements 7 of said rotary shaft 101.

Still more preferably, the fixing body 3 comprises at least one housing 8 for fixing said movable contact elements 7 of the rotary shaft 101.

In an embodiment not illustrated, said movable contact elements 7 are movable by screwing in the at least one housing 8 for fixing the fixing body 3.

According to this embodiment, by way of example, the movable contact elements 7 comprise screws designed to be inserted in the at least one housing 8, which in this configuration has a thread, and screwed until making contact with the rotary shaft 101, so as to prevent an unwanted escape of the shaft 101 from the receiving seat 6.

In another embodiment, illustrated in Figure 2, the rotary shaft 101 may comprise a through hole, inside of which are inserted, passing firstly from the at least one housing 8, the movable contact elements 7, for example a bolt (screw-nut coupling).

According to yet another embodiment, illustrated in Figures 3 to 7, the movable contact elements 7 of the rotary shaft 101 are defined by a pair of C-shaped elements facing each other and of which at least one C-shaped element is movable.

The pair of C-shaped elements is configured for mutually moving between a locked position P1 of the rotary shaft 101, wherein they are both in contact with the rotary shaft 101, and a free position P2, wherein said movable contact elements 7 are spaced from and not engaged with said rotary shaft 101.

In the free position P2, there is no engagement between the rotary shaft 101 and the fixing body 3, which can therefore be detached from the shaft 101 and, consequently, from the stirring machine 100.

In yet another embodiment, illustrated in Figures 3 to 5, the second coupling means 5 comprise magnetic elements.

According to an embodiment, the second coupling means 5 comprise at least one pair of magnetic elements with opposite magnetic charges, so that a magnetic attraction force is set up between the two elements of each pair.

Preferably, one of the two magnetic elements of the at least one pair of magnetic elements with opposite magnetic charges is fixed as one to the fixing body 3 whilst the other is fixed as one to the rotary shaft 101, so that, when said fixing body 3 and rotary shaft 101 are close to one another, a magnetic attraction force is set up between the two magnetic elements which allows the fixing bodies 3 and the rotary shaft 101 to engage each other.

Advantageously, the possibility of reversible engagement between the fixing body 3 and the rotary shaft 101 allows them to be easily uncoupled. In this way, it is possible to extract only the fixing body 3 if it needs maintenance work (which in this way can be performed in a remote position relative to the stirring machine 100) or it must be replaced because it is damaged or not compatible with a new type of stirring element 2.

This allows a saving in resources and a considerable versatility, since the entire stirring machine 100 need not be replaced in the case of a problem solely for the fixing body 3, which may also be replaced for adapting to new types of stirring elements 2.

Preferably, the stirring element 2 is shaped like a teaspoon.

In this shape, the stirring element 2 comprises an end portion 2E equipped with a concavity 2C, defining the teaspoon shape.

When the stirring element 2 is engaged with the fixing body 3, the end part 2E is in a distal position relative to the fixing body 3.

Again in this shape, the stirring element 2 comprises a rod 2S, defining the grip for the stirring element 2.

When the stirring element 2 is engaged with the fixing body 3, the rod 2S is in a proximal position relative to the fixing body 3 itself.

In particular, it is at the free end of the rod 2S, that is to say, the end to which the end part 2E is not coupled, which engages the fixing body 3 and the stirring element 2.

In an embodiment, said stirring element 2 is made of a material derived from cellulose, such as, for example, polylactic or cellulose pulp.

In another embodiment, said stirring element 2 is made of wooden material, such as, for example, poplar or birch.

In yet another embodiment, said stirring element 2 is made of biodegradable plastic material, such as, for example, polybutyrate, polycaprolactone or polybutylene succinate.

The method for stirring a liquid or semi-liquid product implemented by the modular stirrer 1 in combination with the stirring machine 100 is described below schematically and in its basic steps.

The method for stirring a liquid or semi-liquid product comprises, firstly, a step of preparing the stirring machine 100, equipped with a rotary shaft 101 and mechanical and/or electronic devices, to impart to said shaft 101 a rotational motion about its longitudinal axis.

Preferably, the machine 100 comprises a control panel, through which the user U can actuate the rotary movement of the rotary shaft 101 and, if necessary, adjust the speed of said rotation.

The stirring method then comprises a first step of coupling between the fixing body 3 and the rotary shaft 101 using the second coupling means 5 of the fixing body 3 itself.

The stirring method also comprises a second step of coupling between the fixing body 3 and the stirring element 2 through the first coupling means 4 of the fixing body 3 itself.

The stirring method comprises a step of positioning the liquid or semi-liquid food product P which is not yet stirred, contained inside a container C, in such a way that the stirring element 2 is, at least partly, immersed in the liquid or semi-liquid product.

In particular, in order to guarantee a satisfactory mixing of the finished product P, at least the end portion 2E must be completely immersed in the product P contained in the container C.

The stirring method then comprises a step of stirring the product P, wherein the user U, through the control panel, actuates the rotary movement of the rotary shaft 101, which transfers it to the modular stirrer 1 which, especially through the end portion 2E of the stirring element 2, mixes the product P inside the container C.

Upon completion of the stirring step, the stirring method comprises a step of detaching the stirring element 2 from the fixing body; said stirring element 2, being positioned at least partly inside the container C, may be used together with the product P inside the container C.

The teaspoon shape of the stirring element 2 allows, advantageously, that the stirring element 2 can also be used by a user U for consuming the liquid or semi-liquid food product P.

Once the product P has been consumed, the user U can throw away the stirring element 2 together with the container C.

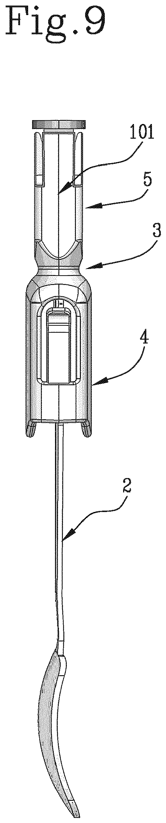

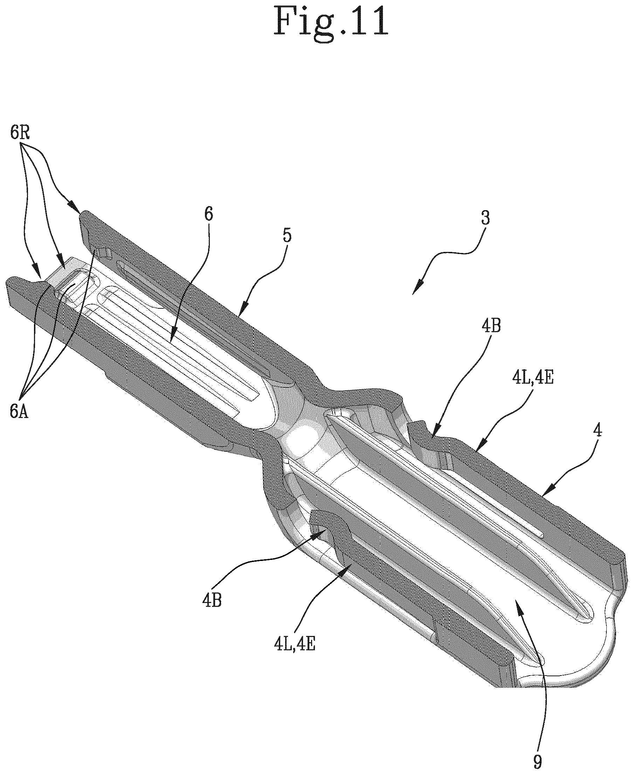

Described below is an embodiment of the modular stirrer 1 and in particular of the fixing body, illustrated in Figures 9 to 11.

In this embodiment, the seat 6 for receiving the rotary shaft 101 comprises at least one contact element 6R.

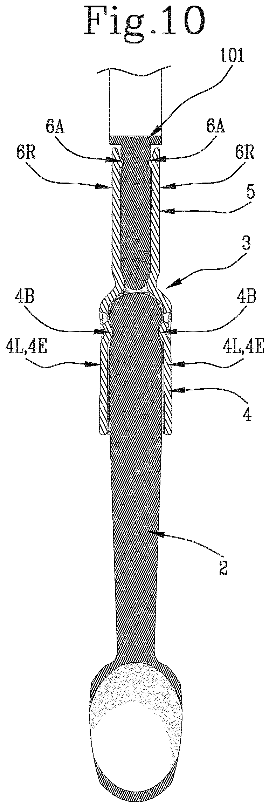

Preferably, as may be noted in Figure 10, the seat 6 has a tapered end portion for receiving and making contact with an end of the shaft 101.

The purpose of the contact element 6R is to hold the shaft 101 inside the seat 6 of the fixing body.

Further, the contact element 6R comes into contact with the shaft 101 to transfer the rotational motion of the shaft 101 itself to the fixing body 3, thereby preventing the shaft 101 from rotating freely inside the housing 6. Preferably, said at least one contact element 6R is elastically compliant.

Still more preferably, said at least one contact element 6R comprises at least one contact protrusion 6A, configured to engage in suitable seats present in the shaft 101 and to prevent accidental detachment with the shaft 101.

In the embodiment illustrated in Figures 9 to 11, the seat 6 comprises four elastically yieldable contact elements 6R.

Thanks to the elastic properties of the at least one contact element 6R, a pushing action applied by a user along the axis of the shaft 101 allows the shaft 101 and the fixing body 3 to be coupled to each other.

This coupling between the shaft 101 and the fixing body 3 is thus accomplished by inserting the shaft into the seat 6.

Similarly, a pulling action applied by a user along the axis of the shaft 101 allows the shaft 101 and the fixing body 3 to be detached from each other.

This pulling action must necessarily be greater than the retaining action of the shaft 101 exerted by the at least one contact element 6R, so as to guarantee the elastic yield of the contact element 6R and the possibility of extracting the shaft 101 from the seat 6.

In this embodiment, the first means 4 for coupling to the stirring element 2 comprise a coupling zone 9.

Inside the coupling zone 9 there is an elastic element 4E, configured for retaining the stirring element 2 inside the coupling zone 9.

Preferably, the elastic element 4E comprises at least one elastically compliant segment 4L.

The at least one segment 4L is configured to allow the insertion in, the retaining in, and the detachment from, the coupling zone 9 of the stirring element 2.

Preferably, said segment 4L has at least one locking end 4B.

Said at least one locking end 4B is configured for engaging in suitable seats present in the stirring element 2, for retaining the stirring element and to prevent the involuntary detachment during the operations for stirring the liquid or semi-liquid product.

It follows that the stirring element 2, preferably at the rod 2S, also has a shape such as to allow an efficient engagement with the fixing body 3, by means of the at least one locking end 4B.

In particular, by means of a pushing action applied by a user, the stirring element 2 can be inserted in the coupling zone 9.

Once the stirring element 2 has been inserted in the coupling zone 9, the elastic properties of the at least one segment 4L guarantee the retaining of the stirring element 2 and oppose the detachment between the stirring element 2 and the coupling zone 9 during the actions for stirring the liquid or semi-liquid food product.

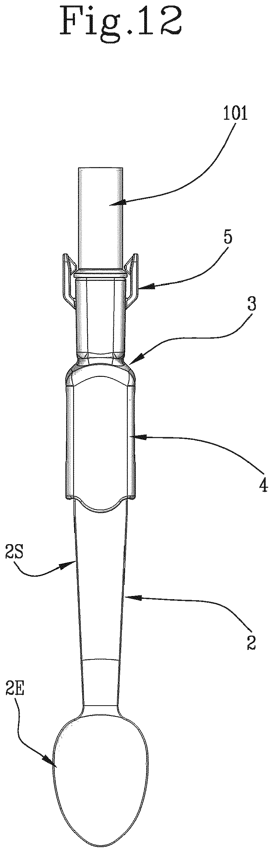

A pulling force applied by a user makes it possible to overcome the retaining action of the at least one segment 4L, which elastically yields, and allows the escape of the stirring element 2 from the coupling zone 9. Described below is a further embodiment of the modular stirrer 1 and in particular of the fixing body 3, illustrated in Figures 12 to 14.

This embodiment is particularly suitable for being fixed to rotary shafts 101 which comprise a final portion 101F with a transversal cross-section less than a rod 101S of the shaft 101.

At the transition between the rod 101S and the final portion 101F, the shaft 101 comprises an enlargement 101R (radially) of its transversal cross-section.

The transversal enlargement 101R is delimited at the bottom by a contact wall 101P having an extension transversal to the longitudinal axis of extension of the shaft 101.

In other words, in the embodiment illustrated, the contact wall 101P defines a shoulder of the shaft 101.

The contact wall 101P delimits at the top the final portion 101F of the shaft 101.

In this embodiment, the seat 6 for receiving the rotary shaft 101 comprises at least a plurality of walls 6P, configured for delimiting the seat 6.

Preferably, as may be noted in Figure 1, the seat 6 has a tapered end portion 6C for receiving and making contact with an end of the shaft 101, if necessary also tapered.

Preferably, in use, that is to say, when the shaft 101 is inserted in the seat 6, the plurality of walls 6P make contact with the bottom of the contact wall 101P, so as to prevent a further sliding of the shaft 101 towards the inside of the seat 6.

The second coupling means 5 are positioned outside the seat 6.

The second coupling means 5 comprise at least one elastically compliant tab 5A connected at a lower end to the plurality of walls 6P.

Preferably, the second coupling means 5 comprise at least two tabs 5A.

In the embodiment of Figure 12, the second coupling means 5 comprise two tabs 5A.

The extension of the tabs 5A is substantially parallel to that of the plurality of walls 6P.

In the final use, that is to say, when the shaft 101 and the fixing body 3 are coupled to each other, the free end of the flaps 5A is positioned above the plurality of walls 6P.

At the free end, each of the flaps 5A comprises a protrusion 5B, more precisely on the face of said flaps facing inwards.

The protrusion 5B is configured to make contact at the top with the enlargement 101R of the shaft 101.

Preferably, the protrusion 5B of each tab 5A has an upper oblique profile and a lower oblique profile to facilitate the operations for engaging and disconnecting the shaft 101 in the seat 6.

In other words, the protrusion 5B is substantially wedge-shaped (preferably bevelled at the vertex).

In use, therefore, the enlargement 101R is interposed, preferably in contact, between the plurality of walls 6P and the protrusions 5B of the tabs 5A, so as to obstruct movements upwards or downwards of the shaft 101.

The elastic properties of the tabs 5A allow the operations for coupling and uncoupling the fixing body 3 to the shaft 101.

In particular, a pushing action applied by a user along the axis of the shaft 101 allows the shaft 101 and the fixing body 3 to be coupled to each other. During insertion of the shaft 101, the enlargement 101R comes into contact with the top of the flaps 5A, which yield elastically, also thanks to the upper oblique profile of the protrusions 5B, opening to the point of allowing insertion of the shaft 101 in the seat 6.

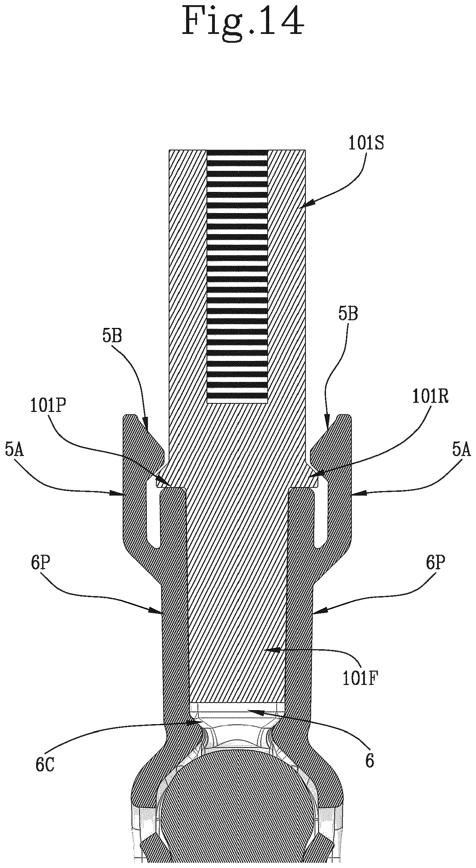

Once the enlargement 101R has passed the protrusions 5B, the flaps 5A return elastically to their original position by positioning at the top, and preferably contacting, the enlargement 101R as illustrated in Figure 14, so as to keep the shaft 101 inside the seat 6.

The coupling between shaft 101 and fixing body 3 is maintained until a pulling action (in the opposite direction to that of insertion) along the axis of the shaft 101 is exerted by a user.

Under the action of this pulling, thanks also to the oblique lower profile of the protrusions 5B, the flaps 5A elastically yield, opening to the point where the shaft 101 can come out of the seat 6.

In a manner almost similar to the embodiment described above, also in this embodiment, the first means 4 for coupling to the stirring element 2 comprise a coupling zone 9.

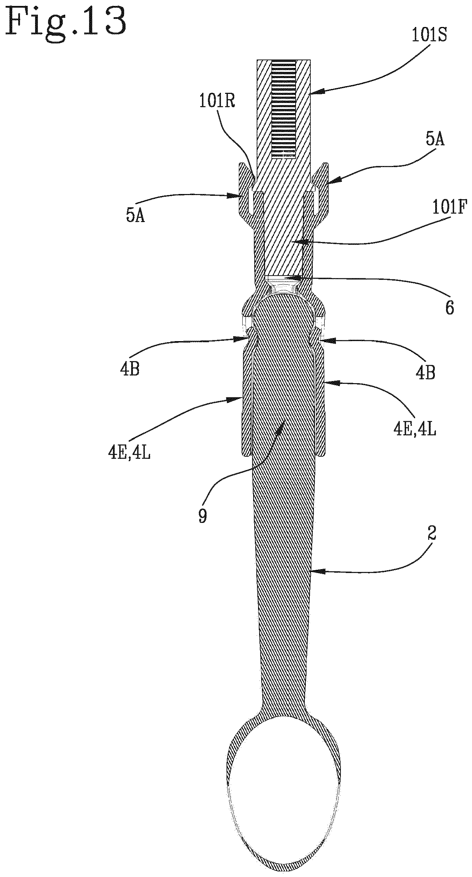

The stirring element 2 is inserted in the coupling zone 9, as illustrated in Figure 13.

Inside the coupling zone there is an elastic element 4E, configured for retaining the stirring element 2 inside the coupling zone.

Preferably, the elastic element 4E comprises at least one elastically compliant segment 4L.

The at least one segment 4L is configured to allow the insertion in, the retaining in, and the detachment from, the coupling zone 9 of the stirring element 2.

Preferably, said segment 4L has at least one locking end 4B.

Said at least one locking end 4B is configured for engaging in suitable seats present in the stirring element 2, for retaining the stirring element and to prevent the involuntary detachment during the operations for stirring the liquid or semi-liquid product.

It follows that the stirring element 2, preferably at the rod 2S, also has a shape such as to allow an efficient engagement with the fixing body 3, by means of the at least one locking end 4B.

In particular, by means of a pushing action applied by a user, the stirring element 2 can be inserted in the coupling zone 9.

Once the stirring element 2 has been inserted in the coupling zone 9, the elastic properties of the at least one segment 4L guarantee the retaining of the stirring element 2 and oppose the detachment between the stirring element 2 and the coupling zone 9 during the actions for stirring the liquid or semi-liquid food product.

A pulling force applied by a user makes it possible to overcome the retaining action of the at least one segment 4L, which elastically yields, and allows the escape of the stirring element 2 from the coupling zone 9. One advantage of the invention is that it provides a modular stirrer which allows an effective stirring, and then an easy consumption, of a liquid or semi-liquid food product.

A further advantage of the invention is that of providing a modular stirrer which allows the effective stirring, and then an easy consumption, of a liquid or semi-liquid food product through a stirring element which has a low environmental impact, that is to say, even if it is not disposed of correctly, causes considerably less adverse affects to the environment than a traditional plastic stirring element.

Another advantage of the invention is to provide a modular stirrer which is easy to install on the stirring machines on the market, in such a way that the adoption of a new type of stirring element does not result in the replacement of the stirring machines already present in the commercial establishments or homes.

## Claims

1. A modular stirrer (1) for liquid or semi-liquid food products which can be fixed to a rotary shaft (101) of a stirring machine (100), comprising:
- a teaspoon-shaped stirring element (2);
- a fixing body (3), equipped with first coupling means (4) for coupling to said stirring element (2) and second coupling means (5) for coupling to said rotary shaft (101), positioned above said stirring element (2) relative to an axis of extension (Z) according to a direction of vertical extension (V), wherein:
- the second coupling means (5) comprise a seat (6) for receiving the rotary shaft (101);
- said second coupling means (5) are positioned outside the seat (6);
- the second coupling means (5) comprise at least one elastically compliant tab (5A) connected at one end to the seat (6);
- and wherein the first coupling means (4) comprise at least one elastic element (4E), configured for retaining the stirring element (2).

2. The modular stirrer (1) according to claim 1, wherein said seat (6) comprises at least one contact element (6R) of the shaft (101) configured for retaining said shaft (101) inside said seat (6).

3. The modular stirrer (1) according to the preceding claim, wherein said at least one contact element (6R) is elastically compliant and is configured to allow the insertion and detachment of the shaft (101).

4. The modular stirrer (1) according to the preceding claim, wherein the at least one tab (5A) comprises, in the surface facing towards the inside of the fixing member (3), a protrusion (5B).

5. The modular stirrer (1) according to claim 1, wherein said second coupling means (5) comprise movable contact elements (7) of said rotary shaft (101).

6. The modular stirrer (1) according to claim 5, wherein the movable contact elements (7) of said rotary shaft (101) are defined by a pair of C-shaped elements, facing each other and configured to be moved between a locked position (P1) of the rotary shaft (101), wherein they are both in contact with the rotary shaft (101), and a free position (P2), wherein the movable contact elements (7) are spaced from and not engaged with the rotary shaft (101).

7. The modular stirrer (1) according to any one of the preceding claims, wherein said stirring element (2) has the shape of a teaspoon and comprises an end portion (2E) equipped with a concavity (2C), defining the teaspoon shape.

8. The modular stirrer (1) according to any one of the preceding claims, wherein first coupling means (4) comprise at least one elastic element (4E), configured for retaining the stirring element (2).

9. The modular stirrer (1) according to any one of the preceding claims, wherein the fixing body (3) is equipped with a coupling zone (9) of the stirring element (2).

10. The modular stirrer (1) according to claim 8 or 9, wherein said elastic element (4E) is positioned inside the coupling zone (9) of the stirring element (2).

11. The modular stirrer (1) according to the preceding claim, wherein the elastic element (4E) comprises at least one elastically compliant segment (4L).

12. The modular stirrer (1) according to the preceding claim, wherein said at least one segment (4L) comprises at least one locking end (4B) designed to engage with the stirring element (2).

## Patentansprüche

1. Modularer Rührer (1) für flüssige oder halbflüssige Nahrungsmittelprodukte, der an einer Rotationswelle (101) eines Rührwerks (100) fixiert werden kann, umfassend:
- ein teelöffelförmiges Rührelement (2);
- einen Fixierkörper (3), der mit ersten Kupplungsmitteln (4) für die Kupplung mit dem Rührelement (2) und mit zweiten Kupplungsmitteln (5) für die Kupplung mit der Rotationswelle (101) ausgestattet ist, positioniert über dem Rührelement (2) relativ zu einer Ausdehnungsachse (Z) nach einer Richtung der vertikalen Ausdehnung (V), wobei
- die zweiten Kupplungsmittel (5) einen Sitz (6) zur Aufnahme der Rotationswelle (101) umfassen;
- die zweiten Kupplungsmittel (5) außerhalb des Sitzes (6) positioniert sind;
- die zweiten Kupplungsmittel (5) mindestens eine elastisch nachgiebige Lasche (5A) umfassen, die an einem Ende mit dem Sitz (6) verbunden ist;
- und wobei die ersten Kupplungsmittel (4) mindestens ein elastisches Element (4E) umfassen, das ausgelegt ist, um das Rührelement (2) zu halten.

2. Modularer Rührer (1) nach Anspruch 1, wobei der Sitz (6) mindestens ein Kontaktelement (6R) der Welle (101) umfasst, das ausgelegt ist, um die Welle (101) im Sitz (6) zu halten.

3. Modularer Rührer (1) nach dem vorhergehenden Anspruch, wobei das mindestens eine Kontaktelement (6R) elastisch nachgiebig und ausgelegt ist, um das Einfügen und Lösen der Welle (101) zu erlauben.

4. Modularer Rührer (1) nach dem vorhergehenden Anspruch, wobei die mindestens eine Lasche (5A) in der Oberfläche, die der Innenseite des Fixierelements (3) zugewandt ist, einen Vorstand (5B) umfasst.

5. Modularer Rührer (1) nach Anspruch 1, wobei die zweiten Kupplungsmittel (5) bewegbare Kontaktelemente (7) der Rotationswelle (101) umfassen.

6. Modularer Rührer (1) nach Anspruch 5, wobei die bewegbaren Kontaktelemente (7) der Rotationswelle (101) durch ein Paar C-förmige Elemente definiert sind, die einander zugewandt und ausgelegt sind, um zwischen einer gesperrten Position (P1) der Rotationswelle (101), in der sie beide mit der Rotationswelle (101) in Kontakt sind, und einer freien Position (P2), in der die bewegbaren Kontaktelemente (7) voneinander beabstandet und nicht mit der Rotationswelle (101) im Eingriff sind, bewegt zu werden.

7. Modularer Rührer (1) nach einem der vorhergehenden Ansprüche, wobei das Rührelement (2) die Form eines Teelöffels aufweist und einen Endabschnitt (2E) umfasst, der mit einer Höhlung (2C) versehen ist, die die Teelöffelform definiert.

8. Modularer Rührer (1) nach einem der vorhergehenden Ansprüche, wobei die ersten Kupplungsmittel (4) mindestens ein elastisches Element (4E) umfassen, das ausgelegt ist, um das Rührelement (2) zu halten.

9. Modularer Rührer (1) nach einem der vorhergehenden Ansprüche, wobei der Fixierkörper (3) mit einer Kupplungszone (9) des Rührelements (2) ausgestattet ist.

10. Modularer Rührer (1) nach Anspruch 8 oder 9, wobei das elastische Element (4E) in der Kupplungszone (9) des Rührelements (2) positioniert ist.

11. Modularer Rührer (1) nach dem vorhergehenden Anspruch, wobei das elastische Element (4E) mindestens ein elastisch nachgiebiges Segment (4L) umfasst.

12. Modularer Rührer (1) nach dem vorhergehenden Anspruch, wobei das mindestens eine Segment (4L) mindestens ein Sperrende (4B) umfasst, das ausgestaltet ist, um mit dem Rührelement (2) in Eingriff zu gelangen.

## Revendications

1. Agitateur modulaire (1) pour produits alimentaires liquides ou semi-liquides pouvant être fixé à un arbre rotatif (101) d'une machine à agiter (100), comprenant :
- un élément d'agitation en forme de cuillère à café (2) ;
- un corps de fixation (3), équipé de premiers moyens d'accouplement (4) pour l'accouplement audit élément d'agitation (2) et de deuxièmes moyens d'accouplement (5) pour l'accouplement audit arbre rotatif (101), positionné au-dessus dudit élément d'agitation (2) par rapport à un axe d'extension (Z) selon une direction d'extension verticale (V), dans lequel :
- les deuxièmes moyens d'accouplement (5) comprennent un siège (6) pour recevoir l'arbre rotatif (101) ;
- lesdits deuxièmes moyens d'accouplement (5) sont positionnés à l'extérieur du siège (6) ;
- les deuxièmes moyens d'accouplement (5) comprennent au moins une languette élastiquement souple (5A) reliée à une extrémité du siège (6) ;
- et dans lequel les premiers moyens d'accouplement (4) comprennent au moins un élément élastique (4E) configuré pour retenir l'élément d'agitation (2).

2. Agitateur modulaire (1) selon la revendication 1, dans lequel ledit siège (6) comprend au moins un élément de contact (6R) de l'arbre (101) configuré pour retenir ledit arbre (101) à l'intérieur dudit siège (6).

3. Agitateur modulaire (1) selon la revendication précédente, dans lequel ledit au moins un élément de contact (6R) est élastiquement souple et est configuré pour permettre l'introduction et le détachement de l'arbre (101).

4. Agitateur modulaire (1) selon la revendication précédente, dans lequel l'au moins une languette (5A) comprend, dans la surface orientée vers l'intérieur de l'élément de fixation (3), une protubérance (5B).

5. Agitateur modulaire (1) selon la revendication 1, dans lequel lesdits deuxièmes moyens d'accouplement (5) comprennent des éléments de contact mobiles (7) dudit arbre rotatif (101).

6. Agitateur modulaire (1) selon la revendication 5, dans lequel les éléments de contact mobiles (7) dudit arbre rotatif (101) sont définis par une paire d'éléments en forme de « C », se faisant face et configurés pour être déplacés entre une position de verrouillage (P1) de l'arbre rotatif (101), dans laquelle ils sont tous deux en contact avec l'arbre rotatif (101), et une position libre (P2), dans laquelle les éléments de contact mobiles (7) sont espacés de l'arbre rotatif (101) et ne sont pas mis en prise avec ce dernier.

7. Agitateur modulaire (1) selon l'une quelconque des revendications précédentes, dans lequel ledit élément d'agitation (2) a la forme d'une cuillère à café et comprend une partie terminale (2E) équipée d'une concavité (2C) définissant la forme de la cuillère à café.

8. Agitateur modulaire (1) selon l'une quelconque des revendications précédentes, dans lequel les premiers moyens d'accouplement (4) comprennent au moins un élément élastique (4E), configuré pour retenir l'élément d'agitation (2).

9. Agitateur modulaire (1) selon l'une quelconque des revendications précédentes, dans lequel le corps de fixation (3) est équipé d'une zone d'accouplement (9) de l'élément d'agitation (2).

10. Agitateur modulaire (1) selon la revendication 8 ou 9, dans lequel ledit élément élastique (4E) est positionné à l'intérieur de la zone d'accouplement (9) de l'élément d'agitation (2).

11. Agitateur modulaire (1) selon la revendication précédente, dans lequel l'élément élastique (4E) comprend au moins un segment élastiquement souple (4L).

12. Agitateur modulaire (1) selon la revendication précédente, dans lequel ledit au moins un segment (4L) comprend au moins une extrémité de verrouillage (4B) conçue pour se mettre en prise avec l'élément d'agitation (2) .
